# EUROPÄISCHE PATENTANMELDUNG

(11) **EP 1 510 845 A1**
(43) Veröffentlichungstag der Anmeldung: **02.03.2005**
(21) Anmeldenummer: 04019667.7
(22) Anmeldetag: 19.08.2004
(51) Int. Cl.: G02B 7/02, G01J 1/04, G01J 5/08

(54) **Opto-elektronische Vorrichtung für ein Kraftfahrzeug**

(30) Priorität: 29.08.2003 DE 10339879
(71) Anmelder: Hella KGaA Hueck & Co., 59552 Lippstadt (DE)
(72) Erfinder: Philip, Dietmar, 59597 Erwitte (DE)

(57) **Zusammenfassung**

Opto-elektronische Vorrichtung für ein Kraftfahrzeug, umfassend mindestens ein opto-elektronisches Bauteil (15) für das Detektieren und/oder Aussenden von Licht sowie mindestens ein Linsenmittel (1), das derart beabstandet zu dem mindestens einen opto-elektronischen Bauteil (15) angeordnet ist, dass durch das mindestens eine Linsenmittel (1) hindurchtretendes Licht zumindest teilweise von dem opto-elektronischen Bauteil (15) erfasst werden kann und/oder dass von dem mindestens einen opto-elektronischen Bauteil (15) ausgehendes Licht zumindest teilweise durch das mindestens eine Linsenmittel (1) hindurchtreten kann, wobei das mindestens eine Linsenmittel (1) Befestigungsmittel umfasst, die eine Befestigung des mindestens einen Linsenmittels (1) in der Vorrichtung ermöglichen.

## Beschreibung

Die vorliegende Erfindung betrifft eine opto-elektronische Vorrichtung für ein Kraftfahrzeug umfassend mindestens ein opto-elektronisches Bauteil für das Detektieren und/oder Aussenden von Licht sowie mindestens ein Linsenmittel, das derart beabstandet zu dem mindestens einen opto-elektronischen Bauteil angeordnet ist, dass durch das mindestens eine Linsenmittel hindurchtretendes Licht zumindest teilweise von dem opto-elektronischen Bauteil erfasst werden kann und/oder dass von dem mindestens einen opto-elektronischen Bauteil ausgehendes Licht zumindest teilweise durch das mindestens eine Linsenmittel hindurchtreten kann.

### STAND DER TECHNIK

Eine Vorrichtung der vorgenannten Art ist aus der deutschen Offenlegungsschrift DE 199 13 955 A1 bekannt. Diese Vorrichtung stellt einen optischen Sensor zum Detektieren von Licht und Erzeugen eines Detektionssignals dar. Bei dieser Vorrichtung sind eine Linse und ein Sensorchip in ein Gehäuse integriert. Die Linse ist dabei an entsprechend vorgesehenen Anlageflächen des Gehäuses flächig verklebt.

Als nachteilig hierbei erweist sich, dass durch die Verklebung der Linse mit dem Gehäuse der exakte Abstand zwischen Linse und als Sensor ausgeführtem opto-elektronischen Bauteil beziehungsweise die exakte Positionierung der Brennebene der Linse zu dem Sensor nicht sicher gewährleistet ist. Vielmehr muss bei einer derartigen Vorrichtung während des Zusammenbaus der Vorrichtung eine beispielsweise kontrollierte Justierung, insbesondere während des Klebevorgangs vorgenommen werden. Dadurch gestaltet sich die Montage der aus dem Stand der Technik bekannten Technik ausgesprochen aufwendig.

Das der vorliegenden Erfindung zugrundeliegende Problem ist die Schaffung einer Vorrichtung der eingangs genannten Art, die einfacher hergestellt werden kann, insbesondere großserientauglich gefertigt werden kann.

### VORTEILE DER ERFINDUNG

Dies wird erfindungsgemäß dadurch erreicht, dass das mindestens eine Linsenmittel Befestigungsmittel umfasst, die eine Befestigung des mindestens einen Linsenmittels in der Vorrichtung ermöglichen. Durch das Vorsehen von Befestigungsmitteln an den Linsenmitteln kann die Anbringung der Linsenmittel in der Vorrichtung exakter durchgeführt werden, so dass die Herstellung vereinfacht werden kann.

Gemäß Anspruch 2 kann vorgesehen sein, dass die Befestigungsmittel Rastelemente umfassen. Durch das Verrasten der Linsenmittel in der Vorrichtung kann eine vergleichsweise exakte Position des Linsenmittels in der Vorrichtung vorgegeben werden.

Gemäß Anspruch 3 kann vorgesehen sein, dass die Befestigungsmittel einstückig mit den Linsenmitteln ausgeführt sind, insbesondere als Spritzgussteil. Durch die einstückige Ausführung der Befestigungsmittel mit den Linsenmitteln wird die Präzision bei der Positionierung des Linsenmittels in der Vorrichtung weiter erhöht. Die Ausführung von Linsenmittel und Befestigungsmittel in einem einstückigen Spritzgussteil ermöglicht eine vergleichsweise einfache Herstellung.

Gemäß Anspruch 4 kann vorgesehen sein, dass die Linsenmittel und die Befestigungsmittel aus einem Kunststoff mit geeigneten optischen und mechanischen Eigenschaften gefertigt sind. Derartiger Kunststoff könnte beispielsweise eine gute Formbeständigkeit bei vergleichsweise hohen Temperaturen, wie beispielsweise bis zu 100° C bieten. Weiterhin kann bei der Ausführung der Befestigungsmittel als Rastmittel durch die Auswahl eines entsprechenden Kunststoffs eine gute Elastizität beispielsweise für die Biegung von Rastarmen oder dergleichen bei der Montage gewährleistet werden.

Gemäß Anspruch 5 kann vorgesehen sein, dass die Rastelemente hinsichtlich der optischen Achse der Linsenmittel radial nach außen ragende Rastnasen aufweisen.

Gemäß Anspruch 6 kann vorgesehen sein, dass die Vorrichtung ein Gehäuse umfasst, an oder in dem das mindestens eine Linsenmittel und das mindestens eine opto-elektronische Bauteil zumindest teilweise angebracht sind.

Dabei kann gemäß Anspruch 7 vorgesehen sein, dass das Gehäuse eine Rastebene aufweist, in der die Verrastung mit den Rastelementen des Linsenmittels stattfindet.

Zusätzlich kann gemäß Anspruch 8 vorgesehen sein, dass das Gehäuse eine Anlagefläche für das opto-elektronische Bauteil oder ein mit diesem verbundenes Teil umfasst. Durch das Gehäuse kann somit aufgrund der Rastebene und der Anlagefläche der genaue Abstand zwischen dem Linsenmittel und dem opto-elektronischen Bauteil vorgegeben werden. Insbesondere kann bei der Fertigung des Gehäuses auf den Abstand zwischen diesen beiden Ebenen Einfluss genommen werden, beispielsweise durch nachträgliches, leichtes Abfräsen, was unter Umständen aufgrund von Fertigungstoleranzen notwendig werden könnte.

Gemäß Anspruch 9 kann vorgesehen sein, dass die Vorrichtung eine opto-elektronische Baueinheit umfasst, die eine Leiterplatte und das mindestens eine auf der Leiterplatte angeordnete opto-elektronische Bauteil aufweist. Beispielsweise kann die Leiterplatte an der entsprechenden Anlagefläche des Gehäuses anliegen. Alternativ dazu könnte das opto-elektronische Bauteil an einer entsprechenden Anlagefläche des Gehäuses anliegen.

Gemäß Anspruch 10 kann vorgesehen sein, dass die Vorrichtung ein Dichtmittel umfasst, das insbesondere als Gummiring mit rhombusförmigem Querschnitt ausgebildet ist, wobei das Dichtmittel zwischen Befestigungsmittel und Gehäuses abdichten kann. Durch den rhombusförmigen Querschnitt weist das Dichtmittel eine weichere Federrate als ein vergleichbarer konventioneller O-Ring auf. Dadurch kann das Dichtmittel Toleranzen zwischen Dichtfläche und Befestigungsfläche ausgleichen.

### ZEICHNUNGEN

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine teilweise geschnittene Explosionsansicht einer erfindungsgemäßen Vorrichtung;
- Fig. 2: eine Ansicht gemäß dem Pfeil II in Fig. 1;
- Fig. 3: eine teilweise geschnittene Ansicht der Vorrichtung gemäß Fig. 1 im zusammengebauten Zustand.

### BESCHREIBUNG DER AUSFÜHRUNGSBEISPIELE

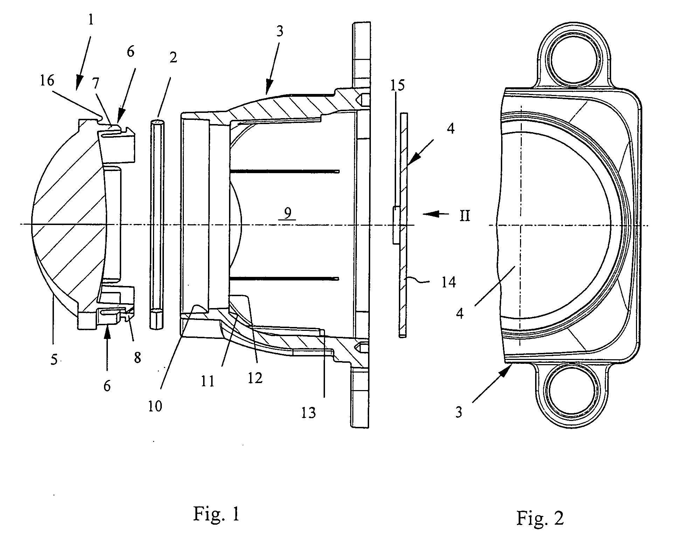

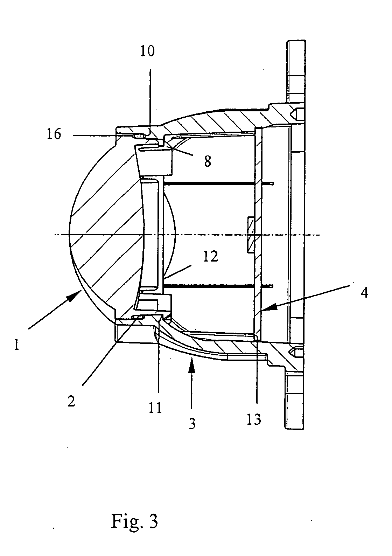

Der Explosionsansicht gemäß Fig. 1 lässt sich entnehmen, dass eine erfindungsgemäße Vorrichtung im wesentlichen ein Linsenmittel 1, ein Dichtmittel 2, ein Gehäuse 3 sowie eine opto-elektronische Baueinheit 4 umfasst. Aus Fig. 3 ist ersichtlich, dass diese einzelnen Bauteile zu der erfindungsgemäßen Vorrichtung zusammengefügt werden können.

Das Linsenmittel 1 weist eine Linse 5, die im abgebildeten Ausführungsbeispiel als Bikonvexlinse ausgeführt ist, sowie Rastelemente 6 auf. Die Rastelemente 6 umfassen sich von der Linse 5 nach rechts in Fig. 1 wegerstreckende Anformungen 7, an deren von der Linse 5 abgewandten Enden Rastnasen 8 ausgebildet sind, die sich von der optischen Achse der Linse 5 radial nach außen erstrecken. Auf seiner von den Rastnasen 8 abgewandten Seite weist die Anformung 7 einen radial nach außen ragenden Vorsprung 16 auf, an dem im zusammengebauten Zustand das Dichtmittel 2 anliegen und axial verpresst werden kann.

Die Linse 5 und die Rastelemente 6 sind in einem einstückigen Bauteil aus Kunststoff realisiert. Insbesondere kann für das Linsenmittel 1 ein Spritzgussteil aus einem geeigneten Kunststoff wie beispielsweise Polycarbonat Verwendung finden. Ein derartiger Werkstoff kann nicht nur gute optische Eigenschaften besitzen, sondern auch eine ausreichende gute Elastizität, um eine Biegung der Rastelemente 6 bei der Montage der Vorrichtung zu ermöglichen. Weiterhin kann ein derartiger Werkstoff eine gute Formbeständigkeit bei vergleichsweise hohen Temperaturen von beispielsweise bis zu 100° C aufweisen.

Aufgrund von Werkzeugtoleranzen und Bauteilschwindung kann die Brennweite der gespritzten Linse 5 von einem vorher berechneten Wert abweichen. Um derartige Abweichungen vom vorgegebenen Wert auszugleichen, können beispielsweise die Rastnasen nachbearbeitet werden, insbesondere in dem zum Spritzen des Linsenmittels 1 verwendeten Werkzeug. Eine weitere Möglichkeit besteht in einer entsprechenden Nachbearbeitung des weiter unten noch zu beschreibenden Gehäuses 3.

Das Dichtmittel 2 ist als Gummiring mit einem rhombusförmigen Querschnitt und spezifizierter Härte ausgebildet. Aufgrund der Wahl des rhombusförmigen Querschnittes besitzt ein derartiger Gummiring in axialer Richtung eine weichere Federrate als ein vergleichbarer konventioneller O-Ring. Der als Dichtmittel 2 dienende Gummiring wird während der Montage der Vorrichtung auf die Außenseiten der Anformungen 7 aufgebracht und dichtet einerseits durch axiale Verpressung und andererseits durch radiale Aufweitung im verrasteten Zustand ab. Durch die weichere Federrate kann der als Dichtmittel 2 dienende Gummiring Toleranzen zwischen Dichtfläche und Rastfläche der Rastelemente ausgleichen, ohne die Gefahr von Spiel oder Überbeanspruchung der Rastelemente 6.

Das Gehäuse 3 kann beispielsweise aus Aluminiumdruckguss bestehen. Das Gehäuse weist einen inneren Hohlraum 9 auf, in den das Linsenmittel 1 und die Baueinheit 4 einbringbar sind und durch den hindurch Licht von der Linse 5 zu der Baueinheit 4 gelangen kann beziehungsweise von der Baueinheit 4 zu der Linse 5. Beabstandet zu der der Linse 5 zugewandten Öffnung des inneren Hohlraums 9 ist eine sich ein Stück weit radial nach innen erstreckende Anlagefläche 10 für die Anlage des als Dichtmittel 2 dienenden Gummirings vorgesehen. Beabstandet zu dieser Anlagefläche 10 für das Dichtmittel 2 ist weiter rechts in Fig. 1 ein radialer Rücksprung 11 ausgebildet, hinter den die Rastnasen 8 einrasten können. Durch den radialen Rücksprung 11 ist somit eine Rastebene 12 gegeben, die die Lage des Linsenmittels 1 in dem Gehäuse 3 vorgibt.

Beabstandet zu der in Fig. 1 rechten, der Baueinheit 4 zugewandten Öffnung des inneren Hohlraums 9 ist in diesem eine nach innen vorspringende Anlagefläche 13 für die Anlage der Baueinheit 4 ausgebildet. Die Anlagefläche 13 definiert somit ebenfalls eine Anlageebene, durch die die Position der Baueinheit 4 in dem Gehäuse vorgegeben wird. Der Abstand zwischen der Rastebene 12 und der durch die Anlagefläche 13 gegebenen Anlageebene ist somit für die Güte der optischen Abbildung, die durch die Linse 5 erfolgt, von besonderer Bedeutung. Es besteht die Möglichkeit, nach der Herstellung des Gehäuses 3 in einem Druckgussverfahren die Rastebene 12 und/oder die durch die Anlagefläche 13 gegebene Anlageebene in einem weiteren Arbeitsgang gemäß entsprechenden Vorgaben zu bearbeiten. Hierbei kann bei der Fertigung im Druckgussverfahren des Gehäuses 3 bei diesen beiden Ebenen eine entsprechende Bearbeitungszugabe vorgesehen sein, die dann anschließend beispielsweise mittels eines Stirnfräsers entsprechend der vorgegebenen Anforderungen abgetragen werden kann. Auf diese Weise kann der vorgegebene Abstand zwischen der Rastebene 12 und der Anlageebene mit einer sehr hohen Genauigkeit realisiert werden. Die Bearbeitung durch den Stirnfräser kann dabei für beide Ebenen in derselben Werkstückaufspannung in einem Arbeitsgang erfolgen.

Weiterhin können bei dieser Fräsbearbeitung auch die durch die Herstellung des Linsenmittels 1 im Spritzgussverfahren entstandenen Toleranzen ausgeglichen werden.

Die opto-elektronische Baueinheit 4 umfasst in dem abgebildeten Ausführungsbeispiel eine Leiterplatte 14 und ein opto-elektronisches Bauteil 15. In dem abgebildeten Ausführungsbeispiel liegt die Leiterplatte 14 an der Anlagefläche 13 an (siehe Fig. 3). Es besteht jedoch auch die Möglichkeit, dass das opto-elektronische Bauteil 15 derart gestaltet ist, dass es direkt an der Anlagefläche 13 anliegen und an dieser befestigt werden kann. In diesem Fall können die Montagetoleranzen weiter verringert werden.

Es besteht die Möglichkeit, dass das opto-elektronische Bauteil 15 ein Sensorbauteil ist, insbesondere ein Infrarotsensor, der beispielsweise in einem Infrarotlasersensor für den Automotive-Bereich eingesetzt werden kann. In diesem Fall wird die Vorrichtung in die Front des Kraftfahrzeugs eingesetzt, wobei die Linse 5 in Fahrtrichtung gesehen vorne angeordnet ist.

Erfindungsgemäß besteht jedoch auch die Möglichkeit, bei einer erfindungsgemäßen Vorrichtung andere opto-elektronische Bauteile 15 zu verwenden. Beispielsweise könnte das Bauteil 15 als Leuchtmittel, insbesondere als LED, Glühlampe oder Halbleiterlaser ausgebildet sein. In all diesen Fällen ist der Abstand zwischen der Linse 5 und dem opto-elektronischen Bauteil von besonderer Bedeutung und muss in jedem Fall vergleichsweise exakt den Vorgaben entsprechen.

Bei einer weiteren Ausführungsform einer erfindungsgemäßen Vorrichtung kann das Dichtmittel 2 direkt an das Linsenmittel 1 angespritzt werden. Bei einem derartigen Herstellungsverfahren muss das Linsenmittel mit integriertem Dichtmittel in einem Zwei-Komponenten-Spritzverfahren hergestellt werden.

## Patentansprüche

1. Opto-elektronische Vorrichtung für ein Kraftfahrzeug, umfassend
- mindestens ein opto-elektronisches Bauteil (15) für das Detektieren und/oder Aussenden von Licht;
- mindestens ein Linsenmittel (1), das derart beabstandet zu dem mindestens einen opto-elektronischen Bauteil (15) angeordnet ist, dass durch das mindestens eine Linsenmittel (1) hindurchtretendes Licht zumindest teilweise von dem opto-elektronischen Bauteil (15) erfasst werden kann und/oder dass von dem mindestens einen opto-elektronischen Bauteil (15) ausgehendes Licht zumindest teilweise durch das mindestens eine Linsenmittel (1) hindurchtreten kann;
**dadurch gekennzeichnet, dass**
- das mindestens eine Linsenmittel (1) Befestigungsmittel umfasst, die eine Befestigung des mindestens einen Linsenmittels (1) in der Vorrichtung ermöglichen.

2. Vorrichtung nach Anspruche 1, **dadurch gekennzeichnet, dass** die Befestigungsmittel Rastelemente (6) umfassen.

3. Vorrichtung nach einem der Ansprüche 1 oder 2, **dadurch gekennzeichnet, dass** die Befestigungsmittel einstückig mit den Linsenmitteln (1) ausgeführt sind, insbesondere als Spritzgussteil.

4. Vorrichtung nach einem der Ansprüche 1 bis 3, **dadurch gekennzeichnet, dass** die Linsenmittel (1) und die Befestigungsmittel aus einem Kunststoff mit geeigneten optischen und mechanischen Eigenschaften gefertigt sind.

5. Vorrichtung nach einem der Ansprüche 2 bis 4, **dadurch gekennzeichnet, dass** die Rastelemente (6) hinsichtlich der optischen Achse der Linsenmittel (1) radial nach außen ragende Rastnasen (8) aufweisen.

6. Vorrichtung nach einem der Ansprüche 1 bis 5, **dadurch gekennzeichnet, dass** die Vorrichtung ein Gehäuse (3) umfasst, an oder in dem das mindestens eine Linsenmittel (1) und das mindestens eine opto-elektronische Bauteil (15) zumindest teilweise angebracht sind.

7. Vorrichtung nach Anspruch 6, **dadurch gekennzeichnet, dass** das Gehäuse (3) eine Rastebene (12) aufweist, in der die Verrastung mit den Rastelementen (6) des Linsenmittels (1) stattfindet.

8. Vorrichtung nach einem der Ansprüche 6 oder 7, **dadurch gekennzeichnet, dass** das Gehäuse eine Anlagefläche für das opto-elektronische Bauteil (15) oder ein mit diesem verbundenes Teil umfasst.

9. Vorrichtung nach einem der Ansprüche 1 bis 8, **dadurch gekennzeichnet, dass** die Vorrichtung eine opto-elektronische Baueinheit (4) umfasst, die eine Leiterplatte (14) und das mindestens eine auf der Leiterplatte (14) angeordnete opto-elektronische Bauteil (15) aufweist.

10. Vorrichtung nach einem der Ansprüche 1 bis 9, **dadurch gekennzeichnet, dass** die Vorrichtung ein Dichtmittel (2) umfasst, das insbesondere als Gummiring mit rhombusförmigem Querschnitt ausgebildet ist, wobei das Dichtmittel (2) zwischen Befestigungsmittel und Gehäuse (3) abdichten kann.
